# EUROPÄISCHE PATENTSCHRIFT

(11) **EP 0 917 754 B1**
(45) Veröffentlichungstag und Bekanntmachung des Hinweises auf die Patenterteilung: **30.01.2002**
(21) Anmeldenummer: 97939944.1
(22) Anmeldetag: 30.07.1997
(51) Int. Cl.: H02K 3/40, H01B 1/04, H02K 3/30

(54) **ELEKTRISCH SCHWACH LEITENDES MATERIAL ZUR HERSTELLUNG EINER ISOLATIONSHÜLSE**
MATERIAL WITH LOW ELECTRICAL CONDUCTIVITY FOR PRODUCING AN INSULATING SLEEVE
MATERIAU A FAIBLE CONDUCTION ELECTRIQUE SERVANT A FABRIQUER UNE GAINE D'ISOLATION

(30) Priorität: 07.08.1996 DE 19631897
(43) Veröffentlichungstag der Anmeldung: 26.05.1999
(73) Patentinhaber: Voith Siemens Hydro Power Generation GmbH & Co. KG, 89522 Heidenheim (DE)
(72) Erfinder: SCHULTEN, Michael, D-44879 Bochum (DE)
(74) Vertreter: Dr. Weitzel & Partner
(86) Internationale Anmeldenummer: DE9701613
(87) Internationale Veröffentlichungsnummer: WO9806161

(56) Entgegenhaltungen:
- US-A- 2 427 700
- US-A- 3 891 880
- US-A- 4 091 139
- US-A- 4 749 636

## Beschreibung

Die Erfindung betrifft ein elektrisch schwach leitendes Material zur Herstellung eines Außenglimmschutzes für einen elektrischen Leiter mit einer Hochspannungswicklung nach dem Oberbegriff des Patentanspruchs 1.

Ein solches Material ist aus der DE-AS 1 021 062 bekannt. Dabei ist auf einer Trägerfolienbahn eine elektrisch leitende Silikon-Kautschuk-Schicht aufgebracht. Die Leitfähigkeit dieser Schicht wird im äußeren Bereich durch Beimischung von Ruß oder Graphit zu dem nicht ausvulkanisierten Silikon-Kautschuk erreicht. Hierbei werden die äußeren Schichten der Silikon-Kautschuk-Isolierung am Nutteil des Wicklungsstabs gut leitend und im Wickelkopfteil elektrisch schwach leitend ausgebildet. - Ein Nachteil dieses bekannten Materials ist darin zu sehen, daß zur Herstellung eines Außenglimmschutzes für Isolatoren mit hohen Bemessungsspannungen eine Schicht des Materials 1/2- überlappt gewickelt und vulkanisiert werden muß, was kosten- und zeitaufwendig ist.

Aus der DE-AS 1 092 529 ist ein weiteres Material zur Herstellung einer Isolierhülse bekannt. Zur Gewährleistung eines verbesserten Außenglimmschutzes wird ein poröses Trägermaterial verwendet, dem durch Imprägnation mit der Lösung eines geeigneten Metallsalzes eine elektrische Leitfähigkeit verliehen wird. - Dieses Material kann nachteiligerweise nicht zur Herstellung von Maschinen verwendet werden, die in der einfach und kostengünstig durchführbaren Ganztränktechnik hergestellt werden.

In der DE 33 16 693 C2 ist ein Verfahren zum Herstellen von amorphen Kohlenstoffschichten auf Substraten beschrieben. Die damit hergestellten Schichten sollen für Infrarotstrahlung durchlässig sein, eine große Härte und eine schwache chemische Reaktionsfähigkeit aufweisen. Dies wird dadurch erreicht, daß Kohlenstoff mit weitgehend amorpher Struktur vorliegt, wobei innerhalb kleiner Bereiche eine typische Diamantbindung erfolgt.

In der DE 39 35 865 C1 ist ein Verfahren zur Abscheidung mikrokristalliner Festkörperpartikel aus der Gasphase mittels chemical vapour deposition (CVD) beschrieben. Die Abscheidung erfolgt hierbei aus einer Kohlenstoff-haltige Gase enthaltenden Gasphase. Das Verfahren wird vorzugsweise zur Herstellung eines Widerstandsheizleiters eingesetzt, der aus einem Karbid oder einem Mischkarbid der Übergangsmetalle Titan, Zirkonium, Hafnium, Vanadium, Niob, Tantal, Molybdän und/oder Wolfram hergestellt ist.

In der DE 42 18 928 A1 ist eine Glimmschutzanordnung für die Statorwicklung einer elektrischen Maschine beschrieben, bei dem ein halbleitendes Glimmerschutzband um einen elektrischen Leiter gewickelt ist.

In der DE-AS 11 60 983 ist ebenfalls ein Verfahren zum Herstellen eines Glimmschutzes für die Leiterstäbe elektrischer Maschinen beschrieben. Hierbei wird ein über seine Länge in seiner Leitfähigkeit abgestuftes Silikongummiband gleichmäßig um eine Leiterstabhülse gewickelt, wodurch sich entsprechend mit dem über die Bandlänge ändernden Widerstand eine entsprechende Widerstandscharakteristik des Glimmschutzes einstellt.

Aufgabe der vorliegenden Erfindung ist es, ein elektrisch schwach leitendes Material anzugeben, mit dem die Nachteile nach dem Stand der Technik beseitigt werden. Insbesondere soll ein elektrisch schwach leitendes Material zur Verfügung gestellt werden, das auch bei hohen Bemessungsspannungen einen ausreichenden Außenglimmschutz gewährleistet und eine kostengüstige Herstellung desselben erlaubt.

Diese Aufgabe wird durch die Merkmale des Patentanspruchs 1 gelöst. Zweckmäßige Weiterbildungen der Erfindung ergeben sich aus den Merkmalen der Patentansprüche 2 - 10.

Nach Maßgabe der Erfindung ist die leitfähige Schicht im wesentlichen aus Kohlenstoff hergestellt, der mikrokristalline und amorphe Strukturen aufweist. Das hat den Vorteil, daß unter Verwendung des erfindungsgemäßen elektrisch schwach leitendes Materials ein verbesserter Außenglimmschutz bei hohen Bemessungsspannungen und damit eine vereinfachte Herstellung einer Isolierhülse erzielbar ist. Mit einem solchen elektrisch schwach leitenden Material ist insbesondere aufgrund des kontinuierlichen anstelle des bisher verwendeten stufenweisen Potentialabbaus eine verlängerte Lebensdauer der potentialsteuernden Schicht (Außenglimmschutz, Endenglimmschutz) einer elektrischen Maschine, insbesondere eines Turbogenerators, erreichbar. Eine aus dem elektrisch schwach leitenden Material hergestellte Außenglimmschutz- oder Endenglimmschutzanordnung ist hochtemperaturstabil, insbesondere bis zu einem Temperaturbereich von 300 bis 400 °C. Somit ist ein Glimmschutz mit der Wärmeklasse H erreichbar. Zudem ist mit dem elektrisch schwach leitenden Material ein Außenglimmschutz- oder Endenglimmschutz für eine Ganztränkung einer elektrischen Maschine mit einer maximalen Bemessungsspannung von über 20 KV erreichbar. Zudem führt ein mit dem elektrisch schwach leitfähigen Material hergestelltes Band, welches um einen elektrischen Leiter einer elektrischen Maschine wickelbar ist, beim Herstellen eines Außengiimmschutzes zu einem reduzierten Arbeitsaufwand gegenüber konventioneller Streichtechnik, bei der beispielsweise ein Graphitlack verwendet wird. Ein weiterer Vorteil des elektrisch schwach leitfähigen Materials besteht darin, daß es chemisch weitgehend inert ist.

Vorteilhafterweise weisen die Strukturen durch den Einbau von Sauerstoff- und Wasserstofffremdatomen gestörte Graphitgitter auf. Solche Strukturen, die auch im Ruß vorkommen, können durch Plasmaabscheidung gezielt erzeugt werden. Je nach Verfahrenssteuerung kann dabei das Verhältnis von mikrokristalliner und amorpher Struktur eingestellt werden. Damit ist es möglich, die elektrischen und mechanischen Eigenschaften der leitfähigen Schicht zu beeinflussen. Eine weitgehend stufenlose Einstellbarkeit der elektrischen Leitfähigkeit ist somit erreichbar.

Nach einem weiteren Ausgestaltungsmerkmal kann die leitfähige Schicht halbleitend sein. Der spezifische elektrische Widerstand der leitfähigen Schicht liegt dabei zweckmäßigerweise im Bereich von 10⁵ - 10¹⁶ Ωcm. Das ermöglicht einen besonders wirkungsvollen Außenglimmschutz.

Die Schichtdicke der leitfähigen Schicht liegt vorzugsweise im Bereich von 5 nm - 4 µm. Derart bemessene Schichten weisen eine sehr gute Haftfähigkeit auf; sie sind dabei gleichzeitig flexibel. Außerdem zeigen sie eine gute Stabilität gegen Umwelteinflüsse wie Feuchte.

Der Träger ist zweckmäßigerweise aus einem porösen Material hergestellt, das im wesentlichen aus Glasfasern gebildet sein kann. Als Material eignen sich insbesondere Glasfasergewebe oder ähnliche Werkstoffe. Der Träger ist vorzugsweise als Band ausgebildet. Unter Verwendung eines solchen Trägers kann ein Außenglimmschutz im kostengünstigen Tränkverfahren hergestellt werden.

Als besonders vorteilhaft wird angesehen, daß die elektrische Leitfähigkeit der leitfähigen Schicht über deren Dicke und/oder in Bandlängsrichtung zunimmt. Damit kann im Falle der Anwendung als Außenglimmschutz von Generatorwicklungselementen eine kontinuierlich abnehmende Leitfähigkeit von der Stabmitte zu den Evolventen erzielt werden. Der sich daraus ergebende kontinuierliche Potentialabbau bewirkt, daß der elektrisch hoch belastete Übergangsbereich vom Außen- zum Endenglimmschutz entfällt. Eine von der Stabmitte zu den Evolventen abnehmende Leitfähigkeit kann besonderes kostengünstig hergestellt werden, indem die elektrische Leitfähigkeit der leitfähigen Schicht in Bandlängsrichtung von den Bandenden zur Bandmitte hin zunimmt.

In der Zeichnung ist ein bevorzugtes Ausführungsbeispiel der Erfindung dargestellt.

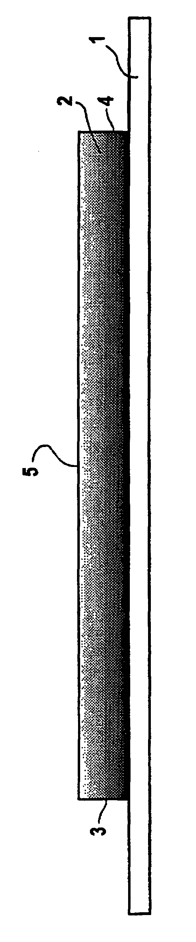

Es zeigt
- Fig. 1: einen schematischen Querschnitt.

Das elektrisch schwach leitende Material besteht aus einem Träger 1 auf dem eine leitfähige Schicht 2 aufgebracht ist. Die elektrische Leitfähigkeit der Schicht 2 nimmt über die Schichtdicke vom Träger 1 nach außen hin ab, was graphisch die nach außen abnehmende Schattierung der Schicht 2 verdeutlicht. Es ist ebenfalls möglich, daß die elektrische Leitfähigkeit in Längsrichtung zu den Enden 3, 4 sich verändert, insbesondere von der Mitte 5 aus zu den Enden 3, 4 abnimmt.

## Patentansprüche

1. Elektrisch schwach leitendes Material zur Herstellung eines Außenglimmschutzes für einen elektrischen Leiter mit einem zumindest einseitig mit einer leitfähigen Schicht (2) versehenen Träger (1),
**dadurch gekennzeichnet, daß** die leitfähige Schicht (2) im wesentlichen aus Kohlenstoff hergestellt ist, der mikrokristalline und amorphe Strukturen aufweist.

2. Elektrisch schwach leitendes Material nach Anspruch 1, wobei die Strukturen durch den Einbau von Sauerstoff- und Wasserstofffremdatomen gestörte Graphitgitter aufweisen.

3. Elektrisch schwach leitendes Material nach Anspruch 1 oder 2, wobei die leitfähige Schicht (2) halbleitend ist.

4. Elektrisch schwach leitendes Material nach Anspruch 3, wobei der spezifische elektrische Widerstand der leitfähigen Schicht (2) im Bereich von 10⁵ - 10¹⁶ Ωcm liegt.

5. Elektrisch schwach leitendes Material nach einem der vorhergehenden Ansprüche, wobei die Schichtdicke der leitfähigen Schicht (2) im Bereich von 5 nm - 4 µm liegt.

6. Elektrisch schwach leitendes Material nach einem der vorhergehenden Ansprüche, wobei der Träger (1) aus porösem Material hergestellt ist.

7. Elektrisch schwach leitendes Material nach Anspruch 6, wobei das Material im wesentlichen aus Glasfasern hergestellt ist.

8. Elektrisch schwach leitendes Material nach einem der vorhergehenden Ansprüche, wobei der Träger (1) als Band ausgebildet ist.

9. Elektrisch schwach leitendes Material nach einem der vorhergehenden Ansprüche, wobei die elektrische Leitfähigkeit der leitfähigen Schicht (2) über deren Dicke und/oder in Bandlängsrichtung zunimmt.

10. Elektrisch schwach leitendes Material nach einem der vorhergehenden Ansprüche, wobei die elektrische Leitfähigkeit der leitfähigen Schicht (2) in Bandlängsrichtung von den Bandenden (3, 4) zur Bandmitte (5) hin zunimmt.

## Claims

1. Material with low electrical conductivity for producing an external corona shielding for an electric conductor with a carrier (1) provided at least on one side with a conductive layer (2), **characterised in that** the conductive layer (2) is substantially produced from carbon which has microcrystalline and amorphous structures.

2. Material with low electrical conductivity according to claim 1, wherein the structures have disturbed graphite lattices owing to the incorporation of oxygen and hydrogen impurities.

3. Material with low electrical conductivity according to claim 1 or 2, wherein the conductive layer (2) is semiconductive.

4. Material with low electrical conductivity according to claim 3, wherein the specific electric resistance of the conductive layer (2) is in the range of 10⁵ to 10¹⁶ Ωcm.

5. Material with low electrical conductivity according to any one of the preceding claims, wherein the layer thickness of the conductive layer (2) is in the range of 5 nm - 4 µm.

6. Material with low electrical conductivity according to any one of the preceding claims, wherein the carrier (1) is produced from porous material.

7. Material with low electrical conductivity according to claim 6, wherein the material is substantially produced from glass fibres.

8. Material with low electrical conductivity according to any one of the preceding claims, wherein the carrier (1) is designed as a strip.

9. Material with low electrical conductivity according to any one of the preceding claims, wherein the electrical conductivity of the conductive layer (2) increases over the thickness thereof and/or in the longitudinal direction of the strip.

10. Material with low electrical conductivity according to any one of the preceding claims, wherein the electrical conductivity of the conductive layer (2) increases in the longitudinal direction of the strip from the strip ends (3, 4) to the middle of the strip (5).

## Revendications

1. Matériau à faible conduction électrique servant à fabriquer une protection extérieure anti-effluve pour un conducteur électrique, avec un support **(1)** muni, au moins sur une face, d'une couche **(2)** conductrice,
**caractérisé en ce que**,
la couche **(2)** conductrice est fabriquée essentiellement en carbone, présentant des structures microcristallines et amorphes.

2. Matériau à faible conduction électrique selon la revendication 1, les structures présentant des réseaux de graphite perturbés par l'intégration d'atomes étrangers, d'oxygène et d'hydrogène.

3. Matériau à faible conduction électrique selon la revendication 1 ou 2, la couche **(2)** conductrice étant semi-conductrice.

4. Matériau à faible conduction électrique selon la revendication 3, la résistance électrique spécifique de la couche **(2)** conductrice étant dans la plage de 10⁵ à 10¹⁶ Ωcm.

5. Matériau à faible conduction électrique selon l'une des revendications précédentes, l'épaisseur de la couche **(2)** conductrice étant dans la plage de 5 nm à 4 µm.

6. Matériau à faible conduction électrique selon l'une des revendications précédentes, le support **(1)** étant fabriqué en matériau poreux.

7. Matériau à faible conduction électrique selon la revendication 6, le matériau étant fabriqué essentiellement à partir de fibres de verre.

8. Matériau à faible conduction électrique selon l'une des revendications précédentes, le support **(1)** étant réalisé sous la forme de bande ou ruban.

9. Matériau à faible conduction électrique selon l'une des revendications précédentes, la conductivité électrique de la couche **(2)** conductrice allant en augmentant, dans la direction de son épaisseur et/ou dans la direction longitudinale de la bande ou du ruban.

10. Matériel à faible conduction électrique selon l'une des revendications précédentes, la conductivité électrique de la couche (2) conductrice allant en augmentant dans la direction longitudinale de la bande ou du ruban, depuis les extrémités de bande ou ruban **(3, 4)** vers le centre de bande ou de ruban **(5)**.
